# EUROPEAN PATENT APPLICATION

(11) **EP 2 451 053 A2**
(43) Date of publication of application: **09.05.2012**
(21) Application number: 11188068.8
(22) Date of filing: 07.11.2011
(51) Int. Cl.: H02K 5/128

(54) **Encapsulated stator assembly**

(30) Priority: 09.11.2010 US 942204
(71) Applicant: General Electric Company, Schenectady, NY 12345 (US)
(72) Inventor: Stephens, Charles Michael, Niskayuna, NY New York 12309 (US)
(74) Representative: Illingworth-Law, William Illingworth

(57) **Abstract**

The present invention provides an encapsulated stator assembly comprising: (a) a stator having a stator core and a stator end region; and (b) a ceramic bore tube defining a surface of the stator core; wherein the stator end region is disposed adjacent to the stator core, and wherein the stator end region comprises a plurality of stator armature end-windings, and wherein the stator end region comprises an inwardly-facing stator wall, and wherein the ceramic bore tube and the inwardly-facing stator wall define an interior volume configured to accommodate a rotor, said inwardly-facing stator wall having an inner surface and an outer surface, at least a portion of said inner surface comprising a barrier layer of a conductive metal selected from the group consisting of copper, silver and aluminum, said inwardly-facing stator wall comprising a corrosion resistant metal. Also provided are motors comprising the novel encapsulated stator assemblies.

## Description

### BACKGROUND

The present invention is related to stator assemblies for use in electrically driven equipment. More specifically, the present invention relates to encapsulated stator assemblies for use in electrically driven motors such as the electric drive motor of a compressor.

In compressors comprising an integral electric motor (integral motor compressors) the electric drive motor is typically cooled by allowing the process gas to flow through portions of the motor. In instances in which the process gas cannot be used as a coolant gas, for example, when the process gas is a corrosive gas such as naturally occurring "sour gas", the motor must be appropriately isolated from the process gas and other cooling measures taken in order to cool the motor.

Corrosion resistant components made of ceramic and/or corrosion resistant metal alloys such as INCONEL may be used to encapsulate sensitive components of the motor such as the motor stator. However, during operation the motor stator bore and end regions are subjected to an intense, high frequency variable magnetic field that can create unacceptably large eddy-current losses in metallic components of the stator core and the stator end region. Eddy-current losses can be particularly severe in the types of metallic materials required for corrosion resistance. Thus, encapsulation of corrosion-sensitive components of the motor may heighten the risk of thermal failure of the motor due to heating of metallic components experiencing an elevated level of eddy-current losses. Various approaches to the reduction of eddy-current losses have been explored but additional improvements are required in order to produce more efficient electrically driven devices.

The present invention provides one or more solutions to the long standing problem of thermal management in encapsulated stator assemblies.

### BRIEF DESCRIPTION

In accordance with one of its aspects, the present invention provides an encapsulated stator assembly comprising: (a) a stator having a stator core and a stator end region; and (b) a ceramic bore tube defining a surface of the stator core; wherein the stator end region is disposed adjacent to the stator core, and wherein the stator end region comprises a plurality of stator armature end-windings, and wherein the stator end region comprises an inwardly-facing stator wall, and wherein the ceramic bore tube and the inwardly-facing stator wall define an interior volume configured to accommodate a rotor, said inwardly-facing stator wall having an inner surface and an outer surface, at least a portion of said inner surface comprising a barrier layer of a conductive metal selected from the group consisting of copper, silver and aluminum, said inwardly-facing stator wall comprising a corrosion resistant metal.

In accordance with another of its aspects, the present invention provides a motor comprising: (a) a rotor configured to be driven magnetically; (b) one or more bearings configured to support the rotor; and (c) an encapsulated stator assembly comprising: (i) stator having a stator core and a stator end region; and (ii) a ceramic bore tube defining a surface of the stator core; wherein the stator end region is disposed adjacent to the stator core, and wherein the stator end region comprises a plurality of stator armature end-windings, and wherein the stator end region comprises an inwardly-facing stator wall, and wherein the ceramic bore tube and the inwardly-facing stator wall define an interior volume configured to accommodate a rotor, said inwardly-facing stator wall having an inner surface and an outer surface, at least a portion of said inner surface comprising a barrier layer of a conductive metal selected from the group consisting of copper, silver and aluminum, said inwardly-facing stator wall comprising a corrosion resistant metal.

In accordance with yet another of its aspects, the present invention provides a motor comprising: (a) a rotor comprising at least one permanent magnet; (b) a plurality of magnetic bearings configured to support the rotor; and (c) an encapsulated stator assembly comprising: (i) a stator having a stator core and a stator end region; and (ii) a ceramic bore tube defining a surface of a stator core; wherein the stator end region is disposed adjacent to the stator core, and wherein the stator end region comprises a plurality of stator armature end-windings, and wherein the stator end region comprises an inwardly-facing stator wall, and wherein the ceramic bore tube and the inwardly-facing stator wall define an interior volume configured to accommodate the rotor, said inwardly-facing stator wall having an inner surface and an outer surface, at least a portion of said inner surface comprising a barrier layer made of copper metal, said inwardly-facing stator wall comprising a corrosion resistant nickel-chromium based super alloy.

Other embodiments, aspects, features, and advantages of the invention will become apparent to those of ordinary skill in the art from the following detailed description, the accompanying drawings, and the appended claims.

### BRIEF DESCRIPTION OF THE DRAWING FIGURES

The present invention will become better understood when the following detailed description is read with reference to the accompanying drawings in which like characters represent like parts throughout the drawings, wherein:

Fig. 1 illustrates a portion of an encapsulated stator assembly provided by one or more embodiments of present invention;

Fig. 2 illustrates a portion of an encapsulated stator assembly provided by one or more embodiments of present invention;

Fig. 3 illustrates an encapsulated stator assembly provided by one or more embodiments of present invention;

Fig. 4 illustrates an encapsulated stator assembly provided by one or more embodiments of present invention;

Fig. 5 illustrates a component of an encapsulated stator assembly provided by one or more embodiments of present invention; and

Fig. 6 illustrates a portion of an encapsulated stator assembly provided by one or more embodiments of present invention.

It will be apparent to those of ordinary skill in the art that the drawings may not be in every instance precisely to scale. However, any such deviations from the ideal will be understood as such and will not detract from this description of the invention.

### DETAILED DESCRIPTION

As noted, in one embodiment the present invention provides a an encapsulated stator assembly comprising: (a) a stator having a stator core and a stator end region; and (b) a ceramic bore tube defining a surface of the stator core; wherein the stator end region is disposed adjacent to the stator core, and wherein the stator end region comprises a plurality of stator armature end-windings, and wherein the stator end region comprises an inwardly-facing stator wall, and wherein the ceramic bore tube and the inwardly-facing stator wall define an interior volume configured to accommodate a rotor, said inwardly-facing stator wall having an inner surface and an outer surface, at least a portion of said inner surface comprising a barrier layer of a conductive metal selected from the group consisting of copper, silver and aluminum, said inwardly-facing stator wall comprising a corrosion resistant metal.

The encapsulated stator assembly provided by the present invention is useful in a variety of electrically driven equipment, for example compressors used to compress corrosive gases and/or gas mixtures such as naturally occurring sour gas.

The stator employed according to various embodiments of the present invention may be any of a number of stators known in the art. In one embodiment the stator has a laminated cylindrical stator core and a stator end region defined by the stator core and the stator armature end-windings. Such laminated stators are commercially available from GE Energy, Peterborough, Ontario. A typical stator comprises a stator bore which is a cylindrical conduit disposed within the center of the stator core. In order to protect corrosion sensitive stator core components from a corrosive coolant gas passing through the stator bore, the stator bore may be lined with a protective liner such as a ceramic bore tube which may serve as the interior surface of the stator core. The interior surface of the stator core is that portion of the stator core directly adjacent to the stator bore. In electrically driven devices in which a magnetically susceptible rotor is disposed within the stator bore, the interior surface of the stator core together with the rotor itself defines the gap between the rotor and the stator core. Ceramic bore tubes are commercially available from a variety of suppliers, such as Morgan Advanced Ceramics, and Coors Tek Inc. In one embodiment, the ceramic bore tube is a cylindrical tube comprising alumina and has a uniform wall thickness of about 0.4 inches. Other ceramic materials suitable for use in the ceramic bore tube include glass, and mixtures containing alumina and silica.

The ceramic bore tube serves multiple functions. As noted, it protects the stator core from corrosive process gases which may be used to cool the motor comprising the encapsulated stator assembly. In addition, the ceramic bore tube is essentially magnetically transparent, and is not subject to the creation of eddy-currents within the ceramic material constituting the ceramic bore tube under the influence of the intense, high frequency variable magnetic fields characteristic of a variety of stators used in magnetically driven motors.

A ceramic bore tube may be inserted into the stator bore such that it fits snugly within the stator bore. The ceramic bore tube typically extends beyond the limits of the stator core and into the stator end regions where the ceramic bore tube is coupled to one or more of the walls of the stator housing which enclose the stator end region which is adjacent to the stator core. The coupling of the ceramic bore tube to one or more of the walls of the stator housing which enclose the stator end region, presents technical challenges due to the very different properties of the walls of the stator housing which are typically made of a corrosion resistant metal and the ceramic material comprising the ceramic bore tube.

In addition, there are significant ceramic bore tube design limitations which limit ceramic bore tubes to more or less simple cylindrical shapes. The ceramic bore tube must be attached to the to the rest of the encapsulated stator assembly relying upon metallic attachment components, which in various embodiments, must also resist the effects of corrosive process gases. In one embodiment, the ceramic bore tube is coupled to a wall of the stator housing which encloses the stator end region via a ceramic to metal flange coupling. In an alternate embodiment, the ceramic bore tube is coupled to a wall of the stator housing which encloses the stator end region via a ceramic to metal bellows-type coupling. In yet another embodiment, the ceramic bore tube is coupled to a wall of the stator housing which encloses the stator end region via a ceramic to metal o-ring-type coupling. Various other means of coupling the ceramic bore tube to the stator housing are known to those of ordinary skill in the art. As will be appreciated by practitioners, in embodiments of the present invention wherein the encapsulated stator assembly is part of a device which is cooled in part by a corrosive process gas stream, the coupling between the stator housing and the ceramic bore tube should be essentially an hermetic seal which prevents the ingress of process gases into the stator end regions and stator core.

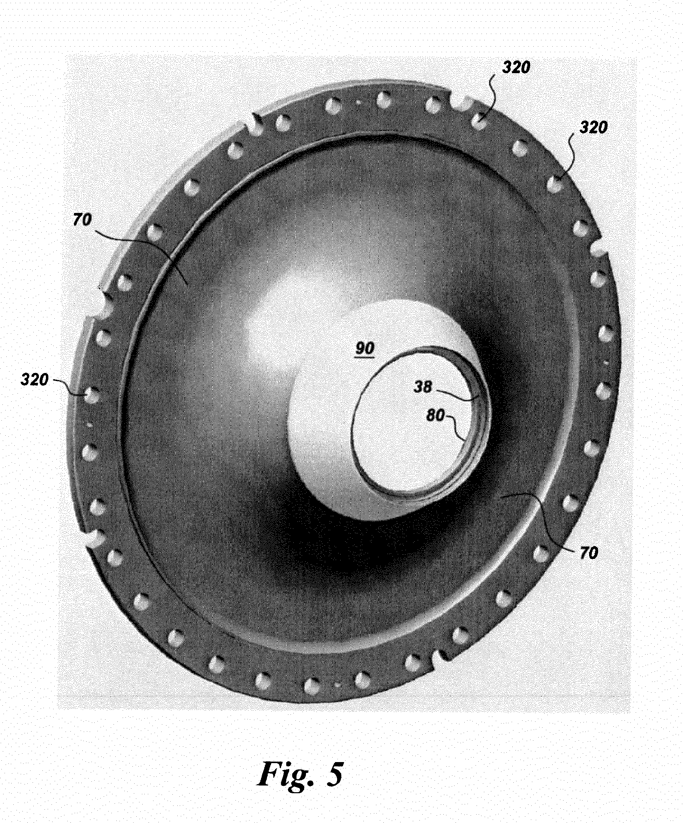

In one embodiment, the stator housing wall to which the ceramic bore tube is coupled is a inwardly-facing stator wall comprising a corrosion resistant metal. In order to better understand the distinction between an inwardly-facing stator wall and a stator wall which is not an inwardly-facing stator wall, it is useful to consider an encapsulated stator assembly having a stator housing comprised of a cylindrical main stator housing wall which envelops the stator core and the stator end regions, and a cone-shaped end cap (also at times herein referred to as a stator housing cone section) having an opening sized to accommodate and couple with the end portions of the ceramic bore tube extending beyond the stator core. (See for example FIG. 5 of this disclosure.) A pair of cone-shaped end caps may be coupled to the ends of the cylindrical main stator housing wall to enclose both the stator end region and the stator core. In the embodiment just illustrated, the stator housing cone section provides the inwardly-facing stator wall and the cylindrical main stator housing wall is not an inwardly-facing stator wall as defined herein.

The ceramic bore tube and the inwardly-facing stator wall define an interior volume of the encapsulated stator assembly which is configured to accommodate a rotor which may be a magnetically susceptible rotor. In addition, in one embodiment, the inner volume defined by the inwardly-facing stator wall and the ceramic bore tube may also be configured to accommodate one or more magnetic bearings.

The inwardly-facing stator wall has an inner surface which faces the interior of the stator end region and an opposite outer surface which faces the interior volume defined by the inwardly-facing stator wall and the ceramic bore tube. In various embodiments of the present invention, the inner surface of the inwardly-facing stator wall comprises a barrier layer of a conductive metal selected from the group consisting of copper, silver and aluminum. Thus, in one embodiment the inner surface of the inwardly-facing stator wall has disposed upon it at least one layer of a metal which is either copper, silver or aluminum covering at least a portion of the inner surface of the inwardly-facing stator wall.

In one embodiment, the barrier layer disposed on the inner surface of the inwardly-facing stator wall comprises copper metal and the inwardly-facing stator wall itself comprises stainless steel. In an alternate embodiment, the embodiment, the barrier layer disposed on the inner surface of the inwardly-facing stator wall consists essentially of copper metal and the inwardly-facing stator wall itself consists essentially of stainless steel. In yet another embodiment, the barrier layer disposed on the inner surface of the inwardly-facing stator wall comprises copper metal and the inwardly-facing stator wall itself comprises at least one super alloy. In an alternate embodiment, the embodiment, the barrier layer disposed on the inner surface of the inwardly-facing stator wall consists essentially of copper metal and the inwardly-facing stator wall itself consists essentially of a super alloy. Materials suitable for use as the inwardly-facing stator wall include corrosion resistant non-magnetic steels such as INCONEL.

The purpose of the barrier layer is to reduce magnetic losses due to eddy-currents induced in the inwardly-facing stator wall by the intense, high frequency variable magnetic field generated by the stator. While, the magnetic field is less intense in the stator end regions than in the stator core and the interior volume defined by the ceramic bore tube, significant magnetic losses attributable to eddy-currents can occur in the inwardly-facing stator wall. As noted, owing to its chemical structure, the ceramic bore tube is not subject to eddy-current formation and magnetic losses associated with eddy-current formation in metallic structures. It has been found that by applying a high conductivity metal such as copper, silver or aluminum to the inner surface of the inwardly-facing stator wall, overall losses due to eddy-currents can be reduced in the encapsulated stator assemblies provided by the present invention. While the magnetic field created by the stator induces eddy-currents in the barrier layer, the high electrical conductivity of the barrier layer relative to the inwardly-facing stator wall (for example a wall made of INCONEL), reduces the heating effect of those eddy-currents. It is believed as well that eddy-current flow in the barrier layer induces a secondary magnetic field which acts to cancel the magnetic field of the stator armature end-windings in the inwardly-facing stator wall and ceramic bore tube attachment components.

As will be appreciated by those of ordinary skill in the art, the dimensions of the barrier layer and inwardly-facing stator wall may affect both the overall performance of the encapsulated stator assembly and the effectiveness of the barrier layer in prevention magnetic losses due to eddy-currents in the inwardly-facing stator wall. In one embodiment, the barrier layer has a has a thickness in a range from about 0.05 to about 0.5 inches. In an alternate embodiment, the barrier layer has a thickness in a range from about 0.1 to about 0.25 inches. In yet another embodiment, the barrier layer has a thickness in a range from about 0.1 to about 0.2 inches.

As noted, the dimensions of the inwardly-facing stator wall will depend on various design considerations. In one embodiment, the inwardly-facing stator wall is of relatively uniform thickness. In an alternate embodiment, the inwardly-facing stator wall is of non-uniform thickness. In one embodiment, the inwardly-facing stator wall has a thickness in a range from about 0.1 to about 1 inches. In an alternate embodiment, the inwardly-facing stator wall has a thickness in a range from about 0.2 to about 0.5 inches.

As noted, in one embodiment the present invention provides a motor comprising: (a) a rotor configured to be driven magnetically (at times herein referred to as a magnetically susceptible rotor); (b) one or more bearings configured to support the rotor; and (c) an encapsulated stator assembly comprising: (i) a stator having a stator core and a stator end region; and (ii) a ceramic bore tube defining a surface of the stator core; wherein the stator end region is disposed adjacent to the stator core, and wherein the stator end region comprises a plurality of stator armature end-windings, and wherein the stator end region comprises an inwardly-facing stator wall; and wherein the ceramic bore tube and the inwardly-facing stator wall define an interior volume configured to accommodate the rotor, said inwardly-facing stator wall having an inner surface and an outer surface, at least a portion of said inner surface comprising a barrier layer of a conductive metal selected from the group consisting of copper, silver and aluminum, said inwardly-facing stator wall comprising a corrosion resistant metal.

In one embodiment the motor provided by the present invention comprises at least one magnetic bearing disposed within the interior volume defined by the ceramic bore tube and the inwardly-facing stator wall. Typically bearings used to support the rotor, whether magnetic bearings or non-magnetic bearings, will be disposed in that portion of the interior volume which is adjacent to the stator end region and not within the stator bore.

In one embodiment, the motor provided by the present invention comprises a magnetically susceptible rotor comprising at least one permanent magnet. In an alternate embodiment, the motor provided by the present invention comprises a magnetically susceptible rotor comprising at least one electromagnet. Those of ordinary skill in the art understand art-recognized methods of constructing magnetically susceptible rotors comprising permanent magnet components and/or electromagnet components, and such magnetically susceptible rotors are available in the stream of commerce.

In one embodiment, the motor provided by the present invention is configured such that the rotor and an inner surface of the ceramic bore tube define an air gap configured to receive and transmit a cooling fluid. In one embodiment the cooling fluid is a coolant gas which flows axially through the bore tube and air gap between the rotor and the ceramic bore tube. The motor may be configured to use a coolant gas other than a process gas, or a process gas to manage heat removal from the motor during operation. Suitable coolant gases include carbon dioxide and sulfur hexafluoride which can be externally chilled and recirculated through the motor if desired. Suitable process gases include methane, and mixtures containing methane hydrogen sulfide and water (sour gas).

In another embodiment, the present invention provides a motor comprising (a) a rotor comprising at least one permanent magnet; (b) a plurality of magnetic bearings configured to support the rotor; and (c) an encapsulated stator assembly comprising: (i) a stator having a stator core and a stator end region; and (ii) a ceramic bore tube defming a surface of a stator core; wherein the stator end region is disposed adjacent to the stator core, and wherein the stator end region comprises a plurality of stator armature end-windings, and wherein the stator end region comprises an inwardly-facing stator wall, and wherein the ceramic bore tube and the inwardly-facing stator wall defme an interior volume configured to accommodate the rotor, said inwardly-facing stator wall having an inner surface and an outer surface, at least a portion of said inner surface comprising a barrier layer made of copper metal, said inwardly-facing stator wall comprising a corrosion resistant nickel-chromium based super alloy.

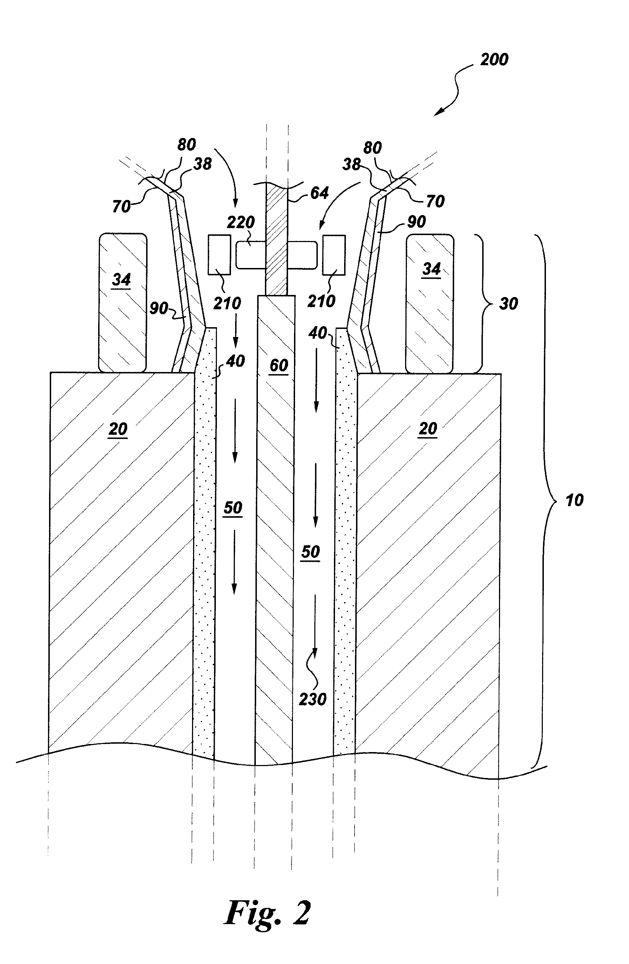

In one embodiment at least one of the magnetic bearings is disposed in the interior volume defined by the inwardly-facing stator wall and the ceramic bore tube. In such circumstances it is at times advantageous for the magnetic bearing to be located in a portion of the interior volume adjacent to the stator end region and magnetically shielded by the barrier layer from the magnetic field associated with the stator armature end-windings. This configuration is illustrated by FIG. 2 herein.

As noted, the corrosion resistant components of the encapsulated stator assembly provided by the present invention are typically either made from a ceramic (See the ceramic bore tube), or are made from a corrosion resistant non-magnetic steel, such as INCONEL. Suitable materials for use as the inwardly-facing stator wall and the main stator housing wall which envelops the stator core and the stator end regions include stainless steels, and nickel-chromium-based superalloys of the INCONEL type (e.g. INCONEL 600, INCONEL 617, INCONEL 625, INCONEL 718). Certain cobalt-based superalloy steels may also be suitable and these include superalloy steels sold by Haynes International Corp. under the trade names ULTIMET and HAYNES 6B. ULTIMET and HAYNES 6B alloys comprise primarily cobalt, chromium, and nickel. Such materials may also be of use in other components of devices comprising encapsulated stator assemblies of the invention such as rotor shafts, magnetic bearings, backup bearings and rotor shaft coupling components.

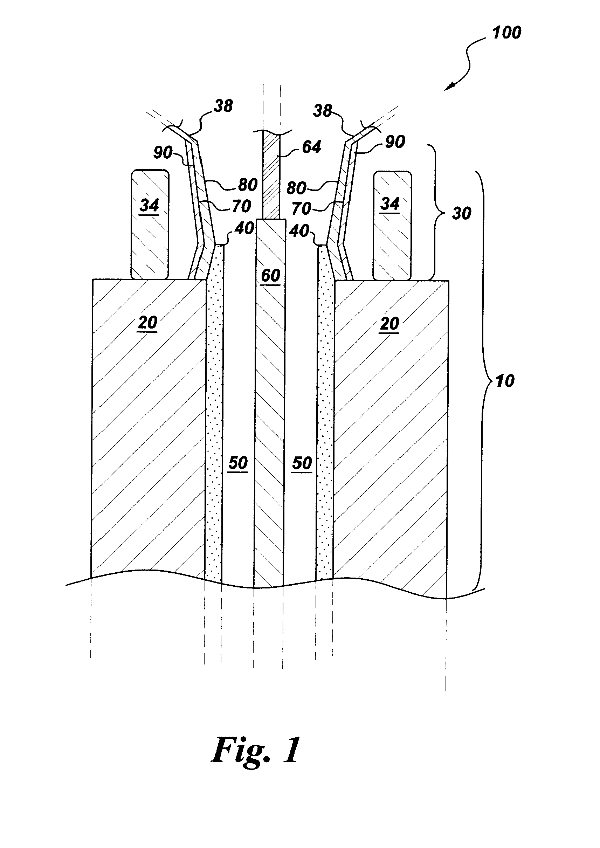

Referring to FIG.1, the figure illustrates a view in cross-section of an encapsulated stator assembly 100 provided by the present invention. The encapsulated stator assembly comprises a stator 10 comprising a stator core 20 and a stator end region 30. The stator end region 30 is disposed adjacent to stator core 20 and comprises stator armature end-windings 34. At least a portion of the stator end region is enclosed by inwardly-facing stator wall 38.

The encapsulated stator assembly illustrated in FIG.1 comprises a ceramic bore tube 40 which defines a surface of the stator core. The ceramic bore tube 40 and the inwardly-facing stator wall 38 define an interior volume 50 configured to accommodate a rotor 60. The rotor 60 may be supported by shaft 64 which may be supported in turn by one or more bearings. As noted herein, the ceramic bore tube may extend beyond the stator core 20 and couple to inwardly-facing stator wall 38 to hermetically seal the stator end region and thus prevent gases in interior volume 50 from contacting the stator armature end-windings and exposed sections of the stator core adjacent to the stator end region.

Inwardly-facing stator wall 38 has an inner surface 70 and an outer surface 80. Inner surface 70 may, but is not required to, form at least a portion of an inner surface of the enclosed stator end region in which the stator armature end-windings are housed. Outer surface 80 is defines the limits of interior volume 50 adjacent to the stator end region 30.

Inwardly-facing stator wall 38 has disposed upon its inner surface 70 a barrier layer 90 which may cover all of or a portion of the inner surface 70 of inwardly-facing stator wall 38. In the embodiment illustrated in FIG.1, the barrier layer 90 covers only a portion of inner surface 70. As noted, the barrier layer comprises a conductive metal selected from the group consisting of copper, silver and aluminum and acts to reduce eddy-current losses and heat generated by the eddy-current losses in inwardly-facing stator wall 38.

Referring to FIG.2, the figure illustrates encapsulated stator assembly 200 provided by the present invention comprising a magnetic bearing disposed within that portion of interior volume 50 which is adjacent to the stator end region 30. The barrier layer 90 acts to shield the various components of the magnetic bearing; the stator portion 210 and the magnetic compliment 230 of the stator portion, from the magnetic field generated by the stator. Thus, the barrier layer 90 may provide advantages related to magnetic bearing operation as well as well as those related to the reduction of magnetic losses in the inwardly-facing stator wall and consequential heating of the motor.

In the encapsulated stator assembly 200, a coolant gas 230 is shown which may be used to remove heat from the device as the coolant gas passes along the air gap between the inner surface of the ceramic bore tube and the rotor.

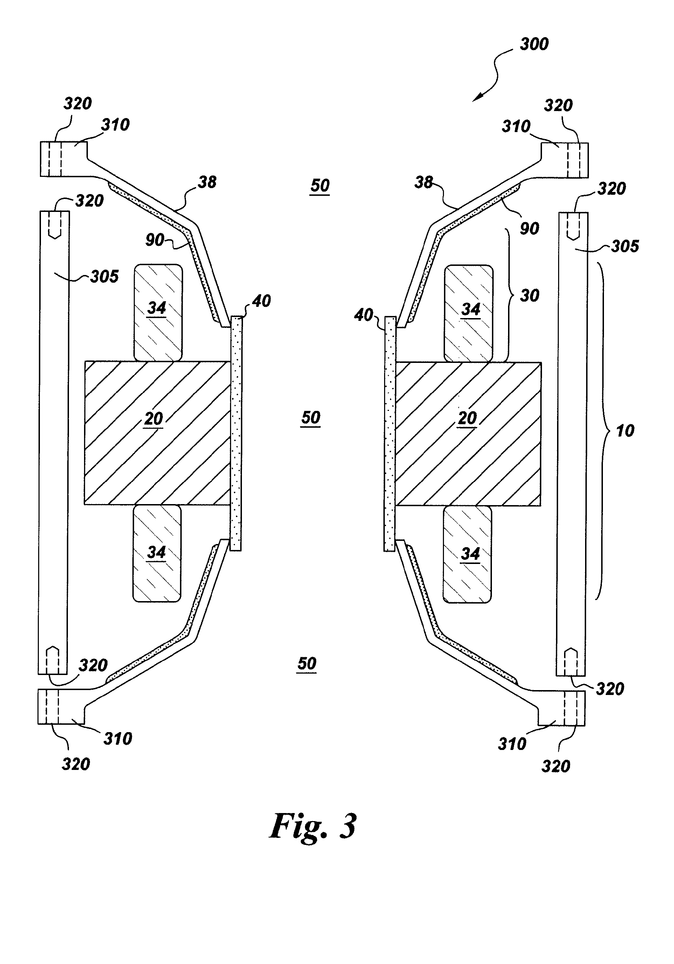

Referring to FIG.3, the figure illustrates an exploded view in cross-section of an encapsulated stator assembly 300 provided by the present invention. Encapsulated stator assembly 300 comprises a stator 10 having a stator core 20 which defines a stator bore in which is disposed a ceramic bore tube 40. A stator end region 30 is adjacent to stator core 20. The stator end region 30 houses the stator armature end-windings 34. The stator as a whole is hermetically sealed by stator housing wall 305 and stator housing cone sections 310.

In the embodiment illustrated in FIG.3 an upper stator housing cone section 310 seals the upper stator end region 30 while a lower stator housing cone section 310 seas the lower stator end region 30. The stator housing cone sections may be coupled to the stator housing wall 305 via fasteners inserted into fastener cavities 320. In one embodiment, the fasteners used are threaded bolts inserted into threaded fastener cavities.

In one embodiment, the stator housing cone sections 310 are designed to fit snuggly over the outer surface of the ceramic bore tube 40 extending beyond region defined by the stator core 20. In an alternate embodiment, the stator housing cone sections are designed to fit within the portion of the ceramic bore tube extending beyond the region defined by the stator core.

In the embodiment illustrated in FIG. 3, the stator housing cone sections comprise a barrier layer 90 which acts to reduce eddy-current formation and associated heating in inwardly-facing stator wall 38. As will be appreciated by those of ordinary skill in the art, inwardly-facing stator wall 38 is an integral part of stator housing cone section 310. Suitable stator housing cone sections 310 having a conductive metal barrier layer 90 disposed on inner surface of the cone section may be prepared via a variety of methods. Thus the barrier layer may be deposited via electroplating methods, thermal spray coating methods, cold spray metallic coating methods, and other techniques known to those of ordinary skill in the art. In one embodiment a suitably sized ring of the conductive metal is shrunk fit over a portion of a stator housing cone section to provide a stator housing cone section having a barrier layer 90 in contact with an inner surface of the inwardly-facing stator wall. Such methods may also be used to apply the barrier layer to inwardly-facing stator walls not configured as stator housing cone sections.

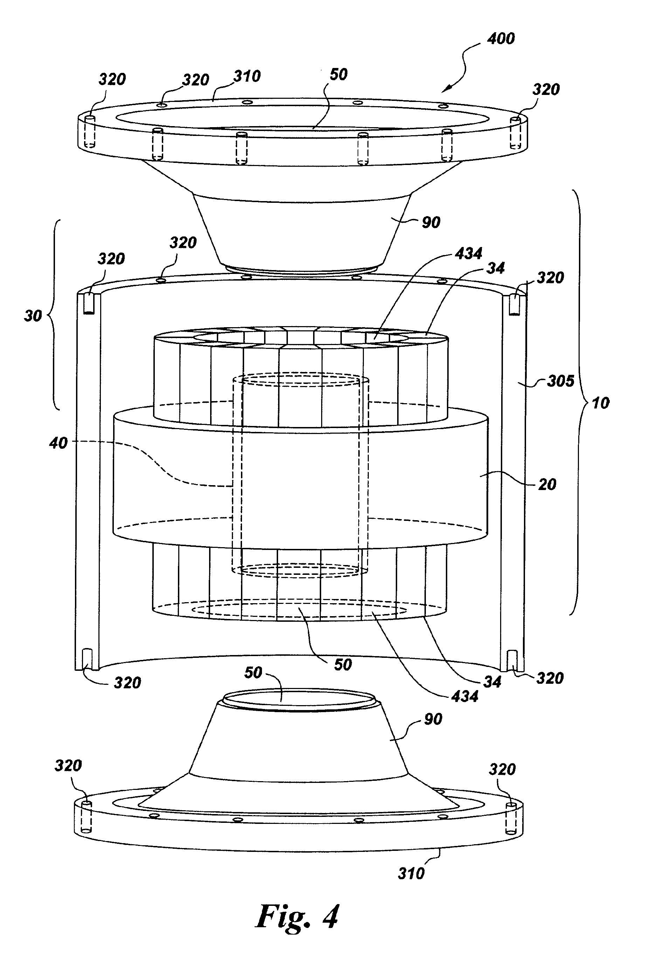

Referring to FIG.4, the figure illustrates a partially three dimensional and partially exploded view of an encapsulated stator assembly 400 provided by the present invention. The encapsulated stator assembly 400 comprises a stator 10 having a stator core 20 and a stator end region 30 adjacent to the stator core. The stator 10 is sealed within a housing formed by coupling stator housing wall 305 (in this embodiment a cylinder within which stator 10 is disposed) to upper and lower stator housing cone sections 310 via fasteners (not shown) inserted into fastener cavities 320. Stator housing cone sections 310 are designed couple with ceramic bore tube 40 and to occupy a portion of cavity 434 defined by the stator armature end-windings. As noted, the stator housing cone sections may be coupled to the ceramic bore tube via a variety of connection devices, for example a ceramic to metal o-ring coupling, a ceramic to metal flange coupling, or a ceramic to metal bellows coupling.

Referring to FIG.5, the figure illustrates a three dimensional view 500 of stator housing cone section 310 according to one embodiment of the present invention. Stator housing cone section 310 is adapted to couple with a cylindrical stator housing wall 305 (See FIG.4) via fasteners (not shown) inserted into fastener cavities 320. Stator housing cone section 310 comprises an inwardly-facing stator wall 38 having an inner surface 70 and an outer surface 80. Barrier layer 90 is disposed on a portion of the inner surface 70 of inwardly-facing stator wall 38 and is adapted to shield a portion of the inwardly-facing stator wall from the magnetic field associated with stator armature end-windings 34 (See FIG.4). In the embodiment shown in FIG. 5, the barrier layer 90 is a cone-shaped band of copper disposed on inner surface 70. The stator housing cone section is adapted to couple with an end portion of the ceramic bore tube, the inner surface of stator housing cone section being coupled to an outer surface of the ceramic bore tube.

### EXPERIMENTAL PART

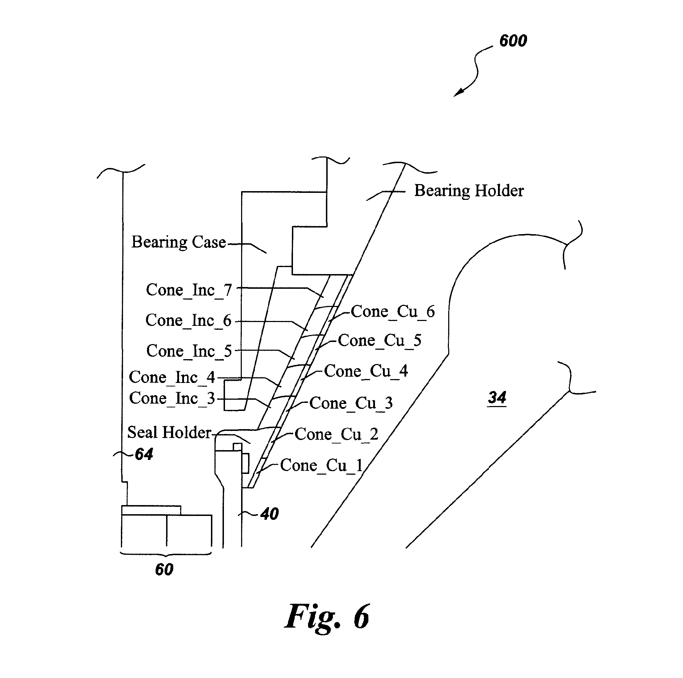

In order to test the effectiveness of including a conductive barrier layer covering at least a portion of the inner surface of an inwardly-facing stator wall in the stator end region, a model system was developed and evaluated using a proprietary axiperiodic electromagnetic modeling program to estimate magnetic losses near the stator end region. The model system 600 studied (FIG.6) included a portion of an encapsulated stator assembly comprising a stator end region containing stator armature end-windings 34 separated from an interior volume 50 by an inwardly-facing stator wall 38 and a barrier layer 90. In the model system, the inwardly-facing stator wall was treated as comprised of INCONEL and the barrier layer was copper metal. For the purposes of the analysis, the inwardly-facing stator wall 38 was divided into 6 sections; a seal holder section having the dimensions indicated and serving to connect the inwardly-facing stator wall to the ceramic bore tube 40, and sections Cone_Inc_3 to Cone_Inc_7 (See FIG.6). The inner surface of the inwardly-facing stator wall was clad in copper metal having a uniform thickness of about 0.110 inches and was divided conceptually into the six sections shown in FIG.6 (Cone_Cu_1 to Cone_Cu_6). The model system also included two additional features which are present in certain embodiments of the present invention; a bearing holder and a bearing case adapted for use with a magnetic bearing (not shown).

Calculations were carried using the axiperiodic electromagnetic finite element analysis (FEA) program based on operation of the model system at a rotor speed of 17,000 rpm and a target power output of 5 MW.

### Small Radial Seal Groove

| Name | Volume, | Loss | Loss Density |
|---|---|---|---|
| | in3 | watts | watts/in3 |
| Seal Holder | 25.54 | 441.6 | 17.29 |
| Cone_Inc_3 | 10.80 | 6.6 | 0.61 |
| Cone_Inc_4 | 11.36 | 2.4 | 0.21 |
| Cone-Inc-5 | 11.93 | 2.5 | 0.21 |
| Cone_Inc_6 | 12.49 | 7.8 | 0.62 |
| Cone-Inc_7 | 13.05 | 67.6 | 5.18 |
| Cone_Cu_1 | 3.310 | 858.3 | 259.31 |
| Cone_Cu_2 | 3.486 | 65.4 | 18.76 |
| Cone_Cu_3 | 3.662 | 59.0 | 16.11 |
| Cone_Cu_4 | 3.838 | 61.2 | 15.95 |
| Cone_Cu_5 | 4.014 | 63.7 | 15.87 |
| Cone_Cu_6 | 4.190 | 203.8 | 48.64 |
| Bearing Holder | 1587 | 96.9 | 0.06 |
| Bearing Case | 17.38 | 26.1 | 1.50 |
| **Total** | | **1963** | |

Magnetic loss and loss density for each section of the inwardly-facing stator wall, barrier layer, bearing holder and bearing case were recorded. Results for the system comprising the copper barrier layer are given in the Table entitled "Small Radial Seal Groove". The term small radial seal groove refers to one of several model systems evaluated, all of which systems gave similar results in terms of magnetic loss and loss density reduction.

An otherwise identical system lacking the barrier layer was modeled as well. Results for the system lacking the copper barrier layer are given in the Table entitled "Small Radial Seal Groove, No Cu Cladding".

### Small Radial Seal Groove, No Cu Cladding

| Name | Volume, | Loss | Loss Density |
|---|---|---|---|
| | in3 | watts | watts/in3 |
| Seal Holder | 25.54 | 2225.0 | 87.12 |
| Cone_Inc_3 | 10.80 | 388.0 | 35.93 |
| Cone_Inc_4 | 11.36 | 395.2 | 34.79 |
| Cone_Inc_5 | 11.93 | 450.8 | 37.79 |
| Cone_Inc_6 | 12.49 | 472.5 | 37.83 |
| Cone_Inc_7 | 13.05 | 471.0 | 36.09 |
| Cone_Cu_1 | 3.310 | | 0.00 |
| Cone_Cu_2 | 3.486 | | 0.00 |
| Cone_Cu_3 | 3.662 | | 0.00 |
| Cone_Cu_4 | 3.838 | | 0.00 |
| Cone_Cu_5 | 4.014 | | 0.00 |
| Cone_Cu_6 | 4.190 | | 0.00 |
| Bearing Holder | 1587 | 262.3 | 0.17 |
| Bearing Case | 17.38 | 123.0 | 7.08 |
| **Total** | | **4788** | |

The data indicate much lower overall losses in the copper cladded system. The reduction in losses is particularly pronounced in the various sections of the inwardly-facing stator wall but significant protection also extends to the bearing holder and bearing case.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. An encapsulated stator assembly comprising
   (a) a stator having a stator core and a stator end region; and
   (b) a ceramic bore tube defining a surface of the stator core;
      wherein the stator end region is disposed adjacent to the stator core, and wherein the stator end region comprises a plurality of stator armature end-windings, and wherein the stator end region comprises an inwardly-facing stator wall,
      and wherein the ceramic bore tube and the inwardly-facing stator wall define an interior volume configured to accommodate a rotor, said inwardly-facing stator wall having an inner surface and an outer surface, at least a portion of said inner surface comprising a barrier layer of a conductive metal selected from the group consisting of copper, silver and aluminum, said inwardly-facing stator wall comprising a corrosion resistant metal.
2. The encapsulated stator assembly according to clause 1, wherein the ceramic bore tube is coupled to the inwardly-facing stator wall via a ceramic to metal coupling o-ring coupling.
3. The encapsulated stator assembly according to clause 1 or clause 2, wherein the ceramic bore tube is coupled to the inwardly-facing stator wall via a ceramic to metal flange coupling.
4. The encapsulated stator assembly according to any preceding clause, wherein the barrier layer comprises copper and the inwardly-facing stator wall comprises stainless steel.
5. The encapsulated stator assembly according to any preceding clause, wherein the barrier layer consists essentially of copper and the inwardly-facing stator wall consists essentially of stainless steel.
6. The encapsulated stator assembly according to any preceding clause, wherein the barrier layer has a thickness in a range from about 0.05 to about 0.5 inches.
7. The encapsulated stator assembly according to any preceding clause, wherein the inwardly-facing stator wall has a thickness in a range from about 0.1 to about 1 inches.
8. A motor comprising:
   (a) a rotor configured to be driven magnetically;
   (b) one or more bearings configured to support the rotor; and
   (c) an encapsulated stator assembly comprising:
      (i) a stator having a stator core and a stator end region; and
      (ii) a ceramic bore tube defining a surface of the stator core;
   wherein the stator end region is disposed adjacent to the stator core, and wherein the stator end region comprises a plurality of stator armature end-windings, and wherein the stator end region comprises an inwardly-facing stator wall;
   and wherein the ceramic bore tube and the inwardly-facing stator wall define an interior volume configured to accommodate the rotor, said inwardly-facing stator wall having an inner surface and an outer surface, at least a portion of said inner surface comprising a barrier layer of a conductive metal selected from the group consisting of copper, silver and aluminum, said inwardly-facing stator wall comprising a corrosion resistant metal.
9. The motor according to any preceding clause, wherein the ceramic bore tube is coupled to the inwardly-facing stator wall via a ceramic to metal coupling o-ring coupling.
10. The motor according to any preceding clause, wherein the ceramic bore tube is coupled to the inwardly-facing stator wall via a ceramic to metal flange coupling.
11. The motor according to any preceding clause, wherein the barrier layer comprises copper and the inwardly-facing stator wall comprises stainless steel.
12. The motor according to any preceding clause, wherein the barrier layer consists essentially of copper and the inwardly-facing stator wall consists essentially of stainless steel.
13. The motor according to any preceding clause, comprising at least one magnetic bearing.
14. The motor according to any preceding clause, wherein the rotor comprises at least one permanent magnet.
15. The motor according to any preceding clause, wherein the rotor comprises at least one electromagnet.
16. The motor according to any preceding clause, wherein the inwardly-facing stator wall comprises at least one super alloy.
17. The motor according to any preceding clause, wherein the rotor and an inner surface of the ceramic bore tube define an air gap configured to receive and transmit a cooling fluid.
18. The motor according to any preceding clause, wherein the cooling fluid is a coolant gas.
19. The motor according to any preceding clause, wherein said coolant gas is a process gas.
20. A motor comprising:
   (a) a rotor comprising at least one permanent magnet;
   (b) a plurality of magnetic bearings configured to support the rotor; and
   (c) an encapsulated stator assembly comprising:
      (i) a stator having a stator core and a stator end region; and
      (ii) a ceramic bore tube defining a surface of a stator core;
         wherein the stator end region is disposed adjacent to the stator core, and wherein the stator end region comprises a plurality of stator armature end-windings, and wherein the stator end region comprises an inwardly-facing stator wall;
         and wherein the ceramic bore tube and the inwardly-facing stator wall define an interior volume configured to accommodate the rotor, said inwardly-facing stator wall having an inner surface and an outer surface, at least a portion of said inner surface comprising a barrier layer made of copper metal, said inwardly-facing stator wall comprising a corrosion resistant nickel-chromium based super alloy.
21. The motor according to any preceding clause, wherein the ceramic bore tube comprises alumina.
22. The motor according to any preceding clause, wherein the barrier layer has a thickness in a range from about 0.05 to about 0.5 inches.
23. The motor according to any preceding clause, wherein the inwardly-facing stator wall has a thickness in a range from about 0.1 to about 1 inches.

## Claims

1. An encapsulated stator assembly comprising
(a) a stator having a stator core and a stator end region; and
(b) a ceramic bore tube defining a surface of the stator core;
wherein the stator end region is disposed adjacent to the stator core, and wherein the stator end region comprises a plurality of stator armature end-windings, and wherein the stator end region comprises an inwardly-facing stator wall,
and wherein the ceramic bore tube and the inwardly-facing stator wall define an interior volume configured to accommodate a rotor, said inwardly-facing stator wall having an inner surface and an outer surface, at least a portion of said inner surface comprising a barrier layer of a conductive metal selected from the group consisting of copper, silver and aluminum, said inwardly-facing stator wall comprising a corrosion resistant metal.

2. The encapsulated stator assembly according to claim 1, wherein the ceramic bore tube is coupled to the inwardly-facing stator wall via a ceramic to metal coupling o-ring coupling.

3. The encapsulated stator assembly according to claim 1 or claim 2, wherein the ceramic bore tube is coupled to the inwardly-facing stator wall via a ceramic to metal flange coupling.

4. The encapsulated stator assembly according to any preceding claim, wherein the barrier layer comprises copper and the inwardly-facing stator wall comprises stainless steel.

5. The encapsulated stator assembly according to any preceding claim, wherein the barrier layer consists essentially of copper and the inwardly-facing stator wall consists essentially of stainless steel.

6. The encapsulated stator assembly according to any preceding claim, wherein the barrier layer has a thickness in a range from about 0.05 to about 0.5 inches.

7. The encapsulated stator assembly according to any preceding claim, wherein the inwardly-facing stator wall has a thickness in a range from about 0.1 to about 1 inches.

8. A motor comprising:
(a) a rotor configured to be driven magnetically;
(b) one or more bearings configured to support the rotor; and
(c) an encapsulated stator assembly according to any one of the preceding claims.

9. The motor according to claim 8, comprising at least one magnetic bearing.

10. The motor according to claim 8 or claim 9, wherein the rotor comprises at least one permanent magnet.

11. The motor according to any of claims 8 to 10, wherein the rotor comprises at least one electromagnet.

12. The motor according to any of claims 8 to 11, wherein the inwardly-facing stator wall comprises at least one super alloy.

13. The motor according to any of claims 8 to 12, wherein the rotor and an inner surface of the ceramic bore tube define an air gap configured to receive and transmit a cooling fluid.

14. A motor comprising:
(a) a rotor comprising at least one permanent magnet;
(b) a plurality of magnetic bearings configured to support the rotor; and
(c) an encapsulated stator assembly comprising:
(i) a stator having a stator core and a stator end region; and
(ii) a ceramic bore tube defining a surface of a stator core;
wherein the stator end region is disposed adjacent to the stator core, and wherein the stator end region comprises a plurality of stator armature end-windings, and wherein the stator end region comprises an inwardly-facing stator wall;
and wherein the ceramic bore tube and the inwardly-facing stator wall define an interior volume configured to accommodate the rotor, said inwardly-facing stator wall having an inner surface and an outer surface, at least a portion of said inner surface comprising a barrier layer made of copper metal, said inwardly-facing stator wall comprising a corrosion resistant nickel-chromium based super alloy.

15. The motor according to claim 14, wherein the ceramic bore tube comprises alumina.
